# EUROPÄISCHE PATENTANMELDUNG

(11) **EP 4 403 286 A1**
(43) Veröffentlichungstag der Anmeldung: **24.07.2024**
(21) Anmeldenummer: 23204841.3
(22) Anmeldetag: 20.10.2023
(51) Int. Cl.: B23D 47/12, B23D 59/00

(54) **SÄGEVORRICHTUNG UND ELEKTRISCHE DREHDURCHFÜHRUNG FÜR EIN WERKZEUG, INSBESONDERE FÜR EINE SÄGEVORRICHTUNG**

(30) Priorität: 20.10.2022 DE 102022211130
(71) Anmelder: Festool GmbH, 73240 Wendlingen am Neckar (DE)
(72) Erfinder: TULODZIECKI, Stefan, 73765 Neuhausen (DE); ALLGAIER, Benjamin, 72587 Römerstein (DE); KRANZ, Philipp, 86754 Munningen (DE); HECKENBERGER, Marius, 70563 Stuttgart (DE); LAUTENSCHLÄGER, Alexander, 73728 Esslingen (DE)
(74) Vertreter: Maiwald GmbH

(57) **Zusammenfassung**

Es wird eine Sägevorrichtung (10) mit einer um eine Mittelachse (A) drehbaren Antriebswelle (12) zum rotatorischen Antreiben eines Sägeblatts (14) beschrieben. Die Sägevorrichtung (10) umfasst eine elektrische Drehdurchführung (26) zur elektrisch leitenden Verbindung der Antriebswelle (12) mit einer Anschlussbaugruppe (28). Die elektrische Drehdurchführung (26) weist eine erste Komponente mit einem sich in Richtung zu einer zweiten Komponente verjüngenden Kontaktabschnitt auf, dessen Mantelfläche eine erste Kontaktfläche bildet. Die zweite Komponente hat einen sich entlang der Mittelachse (A) erstreckenden Aufnahmekanal, dessen Seitenfläche eine zweite Kontaktfläche bildet. Die erste Kontaktfläche liegt zumindest abschnittsweise an der zweiten Kontaktfläche an. Ferner weist der Aufnahmekanal und/oder der sich verjüngende Kontaktabschnitt eine Freistellung zum Ausschluss eines rein axialen Anliegens der ersten Komponente an der zweiten Komponente auf. Darüber hinaus wird eine elektrische Drehdurchführung (26) für ein Werkzeug, insbesondere für eine Sägevorrichtung (10) vorgestellt.

## Beschreibung

Die Erfindung betrifft eine Sägevorrichtung mit einer um eine Mittelachse drehbaren Antriebswelle zum rotatorischen Antreiben eines Sägeblatts. Ferner umfasst die Sägevorrichtung ein Basisteil, an dem die Antriebswelle drehbar gelagert ist. Darüber hinaus weist die Sägevorrichtung eine elektrische Drehdurchführung zur elektrisch leitenden Verbindung der Antriebswelle mit einer Anschlussbaugruppe auf. Die Anschlussbaugruppe ist am Basisteil befestigt. Die elektrische Drehdurchführung umfasst eine bezüglich der Mittelachse koaxial angeordnete, erste Komponente und eine bezüglich der Mittelachse koaxial angeordnete, zweite Komponente.

Außerdem ist die Erfindung auf eine elektrische Drehdurchführung für ein Werkzeug, insbesondere für eine Sägevorrichtung und insbesondere zum elektrisch leitenden Verbinden einer um eine Mittelachse drehbaren Antriebswelle mit einer relativ zur Antriebswelle feststehenden Anschlussbaugruppe gerichtet. Die elektrische Drehdurchführung umfasst eine erste Komponente und eine zweite Komponente, die bezüglich einer Mittelachse koaxial angeordnet sind.

Derartige Sägevorrichtungen und elektrische Drehdurchführungen sind aus dem Stand der Technik bekannt. Die elektrischen Drehdurchführungen werden beispielsweise dafür verwendet, mit der Antriebswelle verbundene Sensoren mit elektrischem Strom und/oder elektrischer Spannung zu versorgen. Ebenso können die elektrischen Drehdurchführungen dafür verwendet werden, mittels Sensoren, die mit der Antriebswelle verbunden sind, generierte Sensorsignale zu einer Anschlussbaugruppe zu leiten, die am nicht drehbaren Basisteil befestigt AS:TOP
ist. Solche Sensoren dienen beispielsweise zur Kontaktdetektion, d. h. zum Feststellen, ob ein mit der Antriebswelle verbundenes Sägeblatt in unerwünschter Weise von einem Nutzer der Sägevorrichtung berührt wird oder eine solche Berührung droht. In diesem Zusammenhang kann das Sägeblatt selbst als Sensor ausgebildet sein. Auf Basis der Kontaktdetektion kann eine Notbremseinheit aktiviert werden.

Die Aufgabe der vorliegenden Erfindung besteht darin, elektrische Drehdurchführungen und damit ausgestattete Sägevorrichtungen weiter zu verbessern. Insbesondere sollen die elektrischen Drehdurchführungen hinsichtlich der Zuverlässigkeit der Signalübertragung, d. h. der Zuverlässigkeit der Übertragung von elektrischem Strom, elektrischer Spannung und/oder einem Sensorsignal verbessert werden.

Die Aufgabe wird durch eine Sägevorrichtung mit einer um eine Mittelachse drehbaren Antriebswelle zum rotatorischen Antreiben eines Sägeblatts gelöst. Ferner umfasst die Sägevorrichtung ein Basisteil, an dem die Antriebswelle drehbar gelagert ist. Darüber hinaus weist die Sägevorrichtung eine elektrische Drehdurchführung zur elektrisch leitenden Verbindung der Antriebswelle mit einer Anschlussbaugruppe auf. Die Anschlussbaugruppe ist am Basisteil befestigt. Die elektrische Drehdurchführung umfasst eine bezüglich der Mittelachse koaxial angeordnete erste Komponente und eine bezüglich der Mittelachse koaxial angeordnete zweite Komponente. Die erste Komponente weist einen sich in Richtung zur zweiten Komponente und entlang der Mittelachse verjüngenden Kontaktabschnitt auf, dessen Mantelfläche eine erste Kontaktfläche bildet. Die zweite Komponente weist einen sich entlang der Mittelachse erstreckenden Aufnahmekanal auf, dessen Seitenfläche eine zweite Kontaktfläche bildet. Dabei liegt die erste Kontaktfläche zumindest abschnittsweise an der zweiten Kontaktfläche an. Zudem weist der Aufnahmekanal und/oder der sich verjüngende Kontaktabschnitt eine Freistellung zum Ausschluss eines rein axialen Anliegens der ersten Komponente an der zweiten Komponente auf. Nachdem sich der erste Kontaktabschnitt in Richtung zur zweiten Komponente verjüngt, ist er an einem der zweiten Komponente zugewandten Ende schlanker als an einem der zweiten Komponente abgewandten Ende. Die Mantelfläche ist demnach als eine Außenfläche des Kontaktabschnitts zu verstehen, deren Flächennormale wenigstens eine Erstreckungskomponente in eine bezüglicher der Mittelachse radiale Richtung hat. Der Aufnahmekanal ist vorzugsweise einseitig geschlossen. Das bedeutet, dass sich der Aufnahmekanal ausgehend von einer Öffnung, die der ersten Komponente zugewandt ist, in die zweite Komponente hinein erstreckt. Unter der Seitenfläche des Aufnahmekanals ist dabei eine Begrenzungsfläche des Aufnahmekanals zu verstehen, deren Flächennormale wenigstens eine Erstreckungskomponente in eine bezüglich der Mittelachse radiale Richtung hat. Bei einer solchen Sägevorrichtung wird ein elektrisch leitfähiger Kontakt zwischen der ersten Kontaktfläche und der zweiten Kontaktfläche mit hoher Zuverlässigkeit gehalten. Der Kontakt ist dabei ein Linienkontakt oder ein Flächenkontakt. In diesem Zusammenhang bewirkt die Freistellung, dass der Kontakt zwischen der ersten Kontaktfläche und der zweiten Kontaktfläche bezüglich der Mittelachse stets eine axiale Komponente und eine radiale Komponente aufweist. Eine rein axiale Anlage der ersten Komponente an der zweiten Komponente ist somit ausgeschlossen. Somit wird ein elektrisch leitfähiger Kontakt von gleichbleibend hoher Qualität auch dann gehalten, wenn es zu unerwünschten Relativbewegungen, zum Beispiel Kippen, zwischen der ersten Komponente und der zweiten Komponente kommen sollte. Die zuverlässige Anlage der ersten Kontaktfläche an der zweiten Kontaktfläche bewirkt darüber hinaus einen Reinigungseffekt. Die erste Kontaktfläche und die zweite Kontaktfläche werden aufgrund der Kombination dieser Anlage und ihrer Relativdrehung mechanisch gereinigt. Auch das ist förderlich für eine zuverlässige elektrische Kontaktierung. Die zuverlässige Kontaktierung zwischen der ersten Kontaktfläche und der zweiten Kontaktfläche bewirkt zudem ein hohes Signal-Rauschverhältnis. Für den Fall, dass mittels der elektrischen Drehdurchführung ein Sensorsignal übertragen wird, geschieht dies also in hoher Qualität. Für den Fall, dass die elektrische Drehdurchführung zur Stromversorgung oder Spannungsversorgung genutzt wird, ist diese Stromversorgung oder Spannungsversorgung besonders zuverlässig.

Der sich verjüngende Kontaktabschnitt kann kegelförmig gestaltet sein. Dies schließt eine Variante ein, wonach der Kontaktabschnitt wie ein Kegel geformt ist. Außerdem schließt dies eine Variante ein, in der der Kontaktabschnitt wie ein Kegelstumpf geformt ist.

Alternativ kann der sich verjüngende Kontaktabschnitt eine konvex gewölbte Außenfläche aufweisen. Beispielsweise ist der Kontaktabschnitt kugelabschnittsförmig gestaltet. In einem anderen Beispiel ist der Kontaktabschnitt als konvex geformter Abschnitt eines Torus ausgeführt. Er verjüngt sich also mit einem konstanten Radius. Selbstverständlich sind auch andere konvexe Wölbungen möglich, insbesondere solche, die durch eine Rotation einer zumindest abschnittsweise konvex gekrümmten Linie entstehen. Beispielsweise kann sich ein Wölbungsradius in Richtung zur zweiten Komponente vergrößern oder verkleinern.

In einer weiteren Alternative weist der sich verjüngende Kontaktabschnitt eine konkav gekrümmte Außenfläche auf. Beispielsweise ist der Kontaktabschnitt als ein konkav geformter Abschnitt eines Torus ausgeführt. Selbstverständlich sind auch andere konkave Wölbungen möglich, insbesondere solche, die durch eine Rotation einer zumindest abschnittsweise konkav gekrümmten Linie entstehen. Beispielsweise kann sich ein Wölbungsradius in Richtung zur zweiten Komponente vergrößern oder verkleinern.

Der Aufnahmekanal der zweiten Komponente kann sich ebenfalls zumindest abschnittsweise in der gleichen Richtung verjüngen wie der Kontaktabschnitt. In dieser Konfiguration kann ein flächiger Kontakt zwischen der ersten Kontaktfläche und der zweiten Kontaktfläche zuverlässig ermöglicht werden.

Bei der elektrischen Drehdurchführung der Sägevorrichtung kann die erste Komponente am Basisteil angeordnet sein, d.h. nicht-drehend sein, und die zweite Komponente an der Antriebswelle angeordnet sein, d. h. drehend oder zumindest drehbar sein. Auch der umgekehrte Fall ist möglich.

Die Antriebswelle kann zudem einen Flansch aufweisen, der dazu ausgebildet ist, ein Sägeblatt mit der Antriebswelle zu verbinden. In diesem Fall wird das Sägeblatt mittels der Antriebswelle über den Flansch angetrieben.

Bei der Sägevorrichtung kann es sich um eine netzunabhängig betreibbare Maschine handeln. Die Sägevorrichtung kann somit einen elektrischen Energiespeicher umfassen, in dem Energie gespeichert ist, die dem Antrieb der Antriebswelle dient. Mit anderen Worten handelt es sich um eine batteriebetriebene oder akkubetriebene Sägevorrichtung. Für solche Sägevorrichtungen ist die zuverlässige und qualitativ hochwertige Kontaktierung der ersten Kontaktfläche und der zweiten Kontaktfläche von besonderer Bedeutung, da es bei derartigen Sägevorrichtungen üblicherweise kein gemeinsames elektrisches Potenzial, d. h. kein Erd-Potenzial oder Null-Potenzial, gibt.

In einer Variante umfasst die Seitenfläche einen kegelstumpfmantelförmigen Flächenabschnitt. Der kegelstumpfmantelförmige Flächenabschnitt bildet die zweite Kontaktfläche. Es versteht sich dabei, dass jeder kegelstumpfmantelförmige Flächenabschnitt als zweite Kontaktfläche dienen kann. Beispielsweise ist die zweite Kontaktfläche als Fase am Eingang des Aufnahmekanals ausgebildet. Die Seitenfläche hat also eine Erstreckungskomponente in axialer Richtung und in Radialrichtung. Die zweite Kontaktfläche kann somit einfach und zuverlässig durch die erste Kontaktfläche kontaktiert werden.

In einer anderen Variante umfasst die Seitenfläche einen konvex gewölbten Flächenabschnitt. Der konvex gewölbte Flächenabschnitt bildet die zweite Kontaktfläche. Es versteht sich wieder, dass jeder konvex gewölbte Flächenabschnitt als zweite Kontaktfläche verwendet werden kann. Beispielsweise ist der konvex gewölbte Flächenabschnitt als Radius am Rand der Eingangsöffnung oder als verrundete Kante am Rand der Eingangsöffnung realisiert. Die Seitenfläche hat also eine Erstreckungskomponente in axialer Richtung und in Radialrichtung. Die zweite Kontaktfläche kann somit einfach und zuverlässig durch die erste Kontaktfläche kontaktiert werden.

Der sich verjüngende Kontaktabschnitt und/oder der Aufnahmekanal können bzw. kann zumindest abschnittsweise bezüglich der Mittelachse rotationssymmetrisch sein. Die elektrische Drehdurchführung hat somit nur einen vergleichsweise geringen mechanischen Drehwiderstand. Sie lässt sich also einfach drehen. Gleichzeitig bleibt der elektrische Kontakt zwischen der ersten Kontaktfläche und der zweiten Kontaktfläche zuverlässig erhalten.

In einem Fall, in dem die zweite Kontaktfläche als konvex gewölbter, rotationssymmetrischer Flächenabschnitt ausgebildet ist, kann dieser auch als trompetenförmig bezeichnet werden.

In einer Ausführungsform sind die erste Komponente und die zweite Komponente mittels eines Federelements gegeneinander federbeaufschlagt. Die erste Kontaktfläche und die zweite Kontaktfläche liegen somit mit besonders hoher Zuverlässigkeit aneinander an. Das gilt insbesondere auch dann, wenn die elektrische Drehdurchführung Erschütterungen oder Vibrationen unterworfen ist. In diesem Zusammenhang ist es sowohl möglich, dass die erste Komponente mittels eines Federelements in Richtung der zweiten Komponente beaufschlagt ist, als auch, dass die zweite Komponente mittels eines Federelements in Richtung der ersten Komponente beaufschlagt ist. Das Federelement kann also jeder aus erster Komponente und zweiter Komponente zugeordnet sein. Auch ist es denkbar, dass sowohl der ersten Komponente als auch der zweiten Komponente ein Federelement zugeordnet ist. In allen Varianten erfolgt die Federbeaufschlagung entlang der Mittelachse der Antriebswelle.

Das Federelement kann eine zylindrisch oder konisch gewickelte Spiralfeder umfassen. Eine zylindrisch gewickelte Spiralfeder hat dabei den Vorteil, dass sie einfach und kostengünstig hergestellt werden kann. Darüber hinaus lässt sich eine derartige Spiralfeder einfach führen, zum Beispiel entlang ihrer Mittelachse. Eine konisch gewickelte Spiralfeder hat den Vorteil, dass sie bezüglich ihrer Mittelachse nur eine geringe seitliche Auslenkung ermöglicht. Somit kann ein Kontakt des Federelements mit in einer Umgebung des Federelements angeordneten Komponenten, z. B. einer Hülse, vermieden werden.

Vorzugsweise ist das Federelement in einer Hülse geführt. Bevorzugt ist die Hülse aus einem Metallwerkstoff hergestellt, zum Beispiel Stahl. Dadurch weist die Hülse eine vergleichsweise hohe Abriebfestigkeit auf. Die Hülse ist somit langlebig und kann das Federelement über lange Zeit zuverlässig führen.

In einer Ausführungsform weist die Hülse einen ersten Abschnitt mit einem ersten Innendurchmesser und einen zweiten Abschnitt mit einem zweiten Innendurchmesser auf. Der zweite Innendurchmesser größer ist als der erste Innendurchmesser. Der zweite Abschnitt ist der zu beaufschlagenden ersten Komponente oder zweiten Komponente zugewandt. Insbesondere durch den ersten Abschnitt ist das Federelement stets präzise und zuverlässig geführt. Dadurch, dass der zweite Abschnitt einen größeren Innendurchmesser aufweist, berührt das Federelement in diesem Bereich die Hülse überhaupt nicht oder nur in geringerem Ausmaß, wenn sie sich quer zur Federmittelachse bewegt. Auf diese Weise werden also unerwünschte Kollisionen zwischen dem Federelement und der Hülse vermieden. Dadurch wird der Abrieb an diesen beiden Komponenten reduziert.

In einem Beispiel ist der Übergang zwischen dem ersten Abschnitt und dem zweiten Abschnitt als Fase oder Radius gestaltet. Alternativ oder zusätzlich ist am der ersten Komponente oder der zweiten Komponente zugewandten Ende des zweiten Abschnitts eine Fase oder ein Radius vorgesehen.

Die Freistellung kann durch einen Freiraum zur kontaktfreien Aufnahme eines der zweiten Komponente zugewandten Endabschnitts der ersten Komponente gebildet sein. Die Freistellung ist also durch einen Abschnitt der zweiten Komponente gebildet, in dem kein Material vorhanden ist. Die Freistellung ist beispielsweise durch eine Vertiefung, Ausnehmung, Fehlstelle oder einen sonstigen geeigneten Freiraum gebildet. Darin wird ein Endabschnitt der ersten Komponente aufgenommen, ohne in diesem Bereich die zweite Komponente zu berühren. Auf diese Weise wird besonders einfach und zuverlässig ein rein axialer Kontakt zwischen der ersten Komponente und der zweiten Komponente vermieden.

Dabei ist es möglich, dass der Freiraum durch einen zylinderförmigen Abschnitt des Aufnahmekanals gebildet ist, der auf einer der ersten Komponente abgewandten Seite der zweiten Kontaktfläche liegt. Der zylinderförmige Abschnitt ist beispielsweise als Bohrung oder als Ausnehmung ausgeführt. Ein solcher Freiraum lässt sich besonders einfach und effizient herstellen.

Die Freistellung kann auch durch eine Fehlstelle an einem der zweiten Komponente zugewandten Endabschnitt der ersten Komponente gebildet sein. Die Freistellung ist also an der ersten Komponente angeordnet. Die Fehlstelle kann dadurch erzeugt werden, dass in diesem Bereich bei der Herstellung der ersten Komponente Material der ersten Komponente entfernt wird. Alternativ ist es möglich, im Zuge der Herstellung der ersten Komponente im Bereich der Fehlstelle erst gar kein Material anzuordnen. Die Fehlstelle ist zum Beispiel als eine Abflachung oder eine Verrundung ausgebildet. Eine solche Fehlstelle lässt sich besonders einfach und effizient herstellen.

In einer Ausführungsform ist die zweite Komponente durch einen Endabschnitt der Antriebswelle gebildet und der Aufnahmekanal in der Antriebswelle angeordnet. Alternativ ist die zweite Komponente durch ein Element der Anschlussbaugruppe gebildet und der Aufnahmekanal im Element der Anschlussbaugruppe angeordnet. In beiden Varianten ist die elektrische Drehdurchführung platzsparend in die Sägevorrichtung integriert. Darüber hinaus werden auf diese Weise für die elektrische Drehdurchführung nur wenige zusätzliche Bauteile benötigt.

In einer Variante umfasst die zweite Komponente einen Einsatz und der Aufnahmekanal ist im Einsatz angeordnet. Das hat den Vorteil, dass der Einsatz aus einem Material hergestellt werden kann, das sich besonders gut für die elektrische Drehdurchführung eignet. Insbesondere wird hierfür ein Material mit guten Verschleißeigenschaften und guten elektrischen Kontaktierungseigenschaften gewählt. Dieses kann im Wesentlichen unabhängig von einem Umgebungsmaterial der Antriebswelle erfolgen. Es lässt sich auf diese Weise eine leistungsfähige elektrische Drehdurchführung schaffen.

In einem Beispiel umfasst der Einsatz ein Graphitmaterial, zum Beispiel Graphitwolle. Insbesondere ist der Einsatz aus Graphitwolle hergestellt.

Der Einsatz kann über einen entlang der Mittelachse wirkenden Formschluss mit dem Endabschnitt der Antriebswelle oder dem Element der Anschlussbaugruppe verbunden sein. Folglich ist der Einsatz in zuverlässiger Weise mit dem Endabschnitt der Antriebswelle oder dem Element der Anschlussbaugruppe verbunden. Der Formschluss umfasst beispielsweise ein Gewinde. Ein derartiger Formschluss lässt sich besonders effizient herstellen.

Darüber hinaus wird die Aufgabe durch eine elektrische Drehdurchführung für ein Werkzeug, insbesondere für eine Sägevorrichtung und insbesondere zum elektrisch leitenden Verbinden einer um eine Mittelachse drehbaren Antriebswelle mit einer relativ zur Antriebswelle feststehenden Anschlussbaugruppe gelöst. Die elektrische Drehdurchführung umfasst eine erste Komponente und eine zweite Komponente, die bezüglich einer Mittelachse koaxial angeordnet sind. Dabei weist die erste Komponente einen sich in Richtung zur zweiten Komponente und entlang der Mittelachse verjüngenden Kontaktabschnitt auf, dessen Mantelfläche eine erste Kontaktfläche bildet. Die zweite Komponente weist einen sich entlang der Mittelachse erstreckenden Aufnahmekanal auf, dessen Seitenfläche eine zweite Kontaktfläche bildet. Die erste Kontaktfläche liegt zumindest abschnittsweise an der zweiten Kontaktfläche an. Der Aufnahmekanal und/oder der Kontaktabschnitt weist eine Freistellung zum Ausschluss eines rein axialen Anliegens der ersten Komponente an der zweiten Komponente auf. Die Sägevorrichtung ist insbesondere eine erfindungsgemäße Sägevorrichtung. Nachdem sich der erste Kontaktabschnitt in Richtung zur zweiten Komponente verjüngt, ist er an einem der zweiten Komponente zugewandten Ende schlanker als an einem der zweiten Komponente abgewandten Ende. Die Mantelfläche ist demnach als eine Außenfläche des Kontaktabschnitts zu verstehen, deren Flächennormale wenigstens eine Erstreckungskomponente in eine bezüglicher der Mittelachse radiale Richtung hat. Der Aufnahmekanal ist vorzugsweise einseitig geschlossen. Das bedeutet, dass sich der Aufnahmekanal ausgehend von einer Öffnung, die der ersten Komponente zugewandt ist, in die zweite Komponente hinein erstreckt. Unter der Seitenfläche des Aufnahmekanals ist dabei eine Begrenzungsfläche des Aufnahmekanals zu verstehen, deren Flächennormale wenigstens eine Erstreckungskomponente in eine bezüglich der Mittelachse radiale Richtung hat. Bei einer solchen elektrischen Drehdurchführung wird ein elektrisch leitfähiger Kontakt zwischen der ersten Kontaktfläche und der zweiten Kontaktfläche mit hoher Zuverlässigkeit gehalten. Der Kontakt ist dabei ein Linienkontakt oder ein Flächenkontakt. In diesem Zusammenhang bewirkt die Freistellung, dass der Kontakt zwischen der ersten Kontaktfläche und der zweiten Kontaktfläche bezüglich der Mittelachse stets eine axiale Komponente und eine radiale Komponente aufweist. Eine rein axiale Anlage der ersten Komponente an der zweiten Komponente ist somit ausgeschlossen. Somit wird ein elektrisch leitfähiger Kontakt von gleichbleibend hoher Qualität auch dann gehalten, wenn es zu unerwünschten Relativbewegungen, zum Beispiel Kippen, zwischen der ersten Komponente und der zweiten Komponente kommen sollte. Die zuverlässige Anlage der ersten Kontaktfläche an der zweiten Kontaktfläche bewirkt darüber hinaus einen Reinigungseffekt. Die erste Kontaktfläche und die zweite Kontaktfläche werden aufgrund der Kombination dieser Anlage und ihrer Relativdrehung mechanisch gereinigt. Auch das ist förderlich für eine zuverlässige elektrische Kontaktierung. Die zuverlässige Kontaktierung zwischen der ersten Kontaktfläche und der zweiten Kontaktfläche bewirkt zudem ein hohes Signal-Rauschverhältnis. Für den Fall, dass mittels der elektrischen Drehdurchführung ein Sensorsignal übertragen wird, geschieht dies also in hoher Qualität. Für den Fall, dass die elektrische Drehdurchführung zur Stromversorgung oder Spannungsversorgung genutzt wird, ist diese Stromversorgung oder Spannungsversorgung besonders zuverlässig.

Es versteht sich, dass die im Zusammenhang mit der erfindungsgemäßen Sägevorrichtung genannten Merkmale, Effekte und Vorteile der elektrischen Drehdurchführung auch für die elektrische Drehdurchführung als solche gelten. Die vorgenannten Beispiele und Varianten können also kombiniert werden, unabhängig davon ob sie im Zusammenhang mit der erfindungsgemäßen Sägevorrichtung oder der erfindungsgemäßen elektrischen Drehdurchführung erwähnt werden.

Die Erfindung wird nachstehend anhand verschiedener Ausführungsbeispiele erläutert, die in den beigefügten Zeichnungen gezeigt sind. Es zeigen:
- Figur 1: eine erfindungsgemäße Sägevorrichtung mit einer erfindungsgemäßen elektrischen Drehdurchführung in einer schematischen Ansicht,
- Figur 2: die Drehdurchführung der Sägevorrichtung aus Figur 1 in einer geschnittenen Detailansicht, wobei die Drehdurchführung gemäß einer ersten Ausführungsform ausgebildet ist,
- Figur 3: die erfindungsgemäße Drehdurchführung gemäß einer zweiten Ausführungsform,
- Figur 4: die erfindungsgemäße Drehdurchführung gemäß einer dritten Ausführungsform,
- Figur 5: die erfindungsgemäße Drehdurchführung gemäß einer vierten Ausführungsform,
- Figur 6: die erfindungsgemäße Drehdurchführung gemäß einer fünften Ausführungsform, und
- Figur 7: die erfindungsgemäße Drehdurchführung gemäß einer sechsten Ausführungsform.

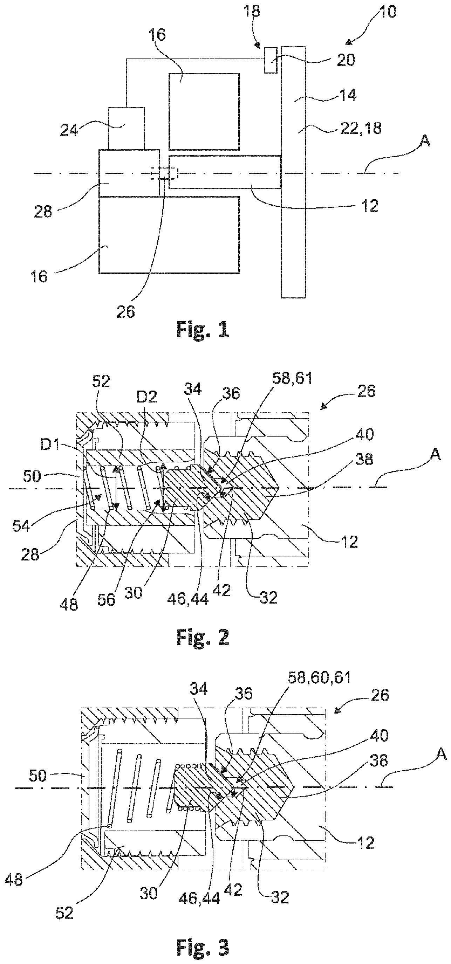

Figur 1 zeigt eine Sägevorrichtung 10.

Diese umfasst eine um eine Mittelachse A drehbare Antriebswelle 12.

An der Antriebswelle 12 ist ein kreisscheibenförmiges Sägeblatt 14 befestigt. Dieses kann mittels der Antriebswelle 12 rotatorisch angetrieben werden.

Die Antriebswelle 12 und somit auch das Sägeblatt 14 sind drehbar an einem Basisteil 16 gelagert.

Die Sägevorrichtung 10 umfasst ferner eine Notbremseinheit 18, mittels der das Sägeblatt 14 zum Stillstand gebracht werden kann, wenn es in unerwünschter Weise von einem Nutzer der Sägevorrichtung 10 berührt wird oder eine derartige Berührung droht.

Die Notbremseinheit 18 umfasst eine Bremsvorrichtung 20, die dazu ausgebildet ist, gegebenenfalls das Sägeblatt 14 bis zum Stillstand abzubremsen.

Darüber hinaus umfasst die Notbremseinheit 18 eine Sensorvorrichtung 22, die dazu ausgebildet ist, einen tatsächlichen oder drohenden Kontakt des Nutzers mit dem Sägeblatt 14 zu detektieren.

Im vorliegenden Beispiel dient das Sägeblatt 14 nicht nur der Materialbearbeitung, sondern ist auch als kapazitiver Sensor ausgebildet. Insofern stellt das Sägeblatt 14 einen Bestandteil der Sensorvorrichtung 22 dar.

Die Notbremseinheit 18 umfasst ferner eine Steuerungseinheit 24, die sowohl mit der Sensorvorrichtung 22 als auch mit der Bremsvorrichtung 20 gekoppelt ist. Die Steuerungseinheit 24 ist dazu ausgebildet, die Bremsvorrichtung 20 zu aktivieren, sobald mittels der Sensorvorrichtung 22 ein tatsächlicher oder drohender Kontakt des Nutzers mit dem Sägeblatt 14 detektiert wurde.

Damit das Sägeblatt 14 als kapazitiver Sensor wirken kann, muss es mit einer elektrischen Spannung beaufschlagt werden.

Um dies zu ermöglichen, umfasst die Sägevorrichtung 10 eine elektrische Drehdurchführung 26, die im Folgenden auch schlicht als Drehdurchführung 26 bezeichnet wird.

Die elektrische Drehdurchführung 26 ist elektrisch zwischen der Antriebswelle 12 und einer Anschlussbaugruppe 28 angeordnet. Nachdem das Sägeblatt 14 elektrisch leitend mit der Antriebswelle 12 verbunden ist, lässt sich auf diese Weise das Sägeblatt 14 elektrisch mit der Anschlussbaugruppe 28 verbinden.

Die Anschlussbaugruppe 28 ist am Basisteil 16 befestigt, sie dreht sich also nicht.

Die Drehdurchführung 26 ist im Detail in Figur 2 gezeigt.

Sie umfasst eine bezüglich der Mittelachse A koaxial angeordnete, erste Komponente 30. Diese ist an der Anschlussbaugruppe 28 angeordnet und dreht sich folglich nicht.

In der dargestellten Ausführungsform ist die erste Komponente 30 als rotationssymmetrisches, pilzförmiges Bauteil ausgebildet. Im weitesten Sinne kann die erste Komponente 30 auch als stiftförmig bezeichnet werden.

Die erste Komponente 30 weist einen sich in Richtung zu einer zweiten Komponente 32, die nachfolgend noch im Detail erläutert werden wird, verjüngenden Kontaktabschnitt 34 auf.

Der Kontaktabschnitt 34 verjüngt sich zudem entlang der Mittelachse A.

In der Ausführungsform gemäß Figur 2 ist der Kontaktabschnitt 34 als bezüglich der Mittelachse A rotationssymmetrischer Kegel ausgebildet. Die Spitze des Kegels weist in Richtung der zweiten Komponente 32.

Die Mantelfläche des Kontaktabschnitt 34, also die Mantelfläche des Kegels, bildet eine erste Kontaktfläche 36.

Die zweite Komponente 32 ist durch einen Endabschnitt der Antriebswelle 12 gebildet.

Genauer gesagt umfasst die zweite Komponente 32 einen Einsatz 38, der über ein Gewinde im Ende der Antriebswelle 12 befestigt ist. Der Einsatz 38 ist also entlang der Mittelachse A formschlüssig mit dem Endabschnitt der Antriebswelle 12 verbunden.

Dabei ist der Einsatz 38 bezüglich der Mittelachse A koaxial angeordnet.

Ebenfalls koaxial zur Mittelachse A ist im Einsatz 38 ein Aufnahmekanal 40 positioniert. Der Aufnahmekanal 40 erstreckt sich also entlang der Mittelachse A. Ferner ist der Aufnahmekanal 40 bezüglich der Mittelachse A rotationssymmetrisch.

Eine Seitenfläche 42 des Aufnahmekanals 40 bildet eine zweite Kontaktfläche 44.

Genauer gesagt umfasst die Seitenfläche 42 einen kegelstumpfmantelförmigen Flächenabschnitt 46. Dieser ist als zweite Kontaktfläche 44 ausgebildet.

In der in Figur 2 dargestellten Ausführungsform kann der kegelstumpfmantelförmige Flächenabschnitt 46 auch als Fase am Eingang des Aufnahmekanals 40 angesehen werden.

Im dargestellten Ausführungsbeispiel sind der Winkel, unter dem die erste Kontaktfläche 36 gegenüber der Mittelachse A geneigt ist, und der Winkel, unter dem die zweite Kontaktfläche 44 gegenüber der Mittelachse A geneigt ist, im Wesentlichen gleich. Somit liegen die erste Kontaktfläche 36 und die zweite Kontaktfläche 44 flächig aneinander an.

Die Drehdurchführung 26 umfasst darüber hinaus ein Federelement 48, das unter Spannung zwischen der ersten Komponente 30 und einem Grundkörper 50 der Anschlussbaugruppe 28 angeordnet ist.

Die erste Komponente 30 und die zweite Komponente 32 sind also mittels des Federelements 48 gegeneinander federbeaufschlagt.

In der Ausführungsform gemäß Figur 2 ist das Federelement 48 eine zylindrisch gewickelte Spiralfeder.

Das Federelement 48 ist dabei in einer Hülse 52 geführt, die koaxial zur Mittelachse am Grundkörper 50 befestigt ist.

Das Federelement 48 verläuft also im Inneren der Hülse 52.

Dabei weist die Hülse 52 einen ersten Abschnitt 54 mit einem ersten Innendurchmesser D1 auf. Dabei ist der erste Abschnitt 54 auf einer der ersten Komponente 30 und der zweiten Komponente 32 abgewandten Seite der Hülse 32 vorgesehen.

Darüber hinaus umfasst die Hülse 52 einen zweiten Abschnitt 56 mit einem zweiten Innendurchmesser D2. Der zweite Innendurchmesser D2 ist dabei größer als der erste Innendurchmesser D1. Ein Übergang zwischen dem ersten Abschnitt 54 und dem zweiten Abschnitt 56 umfasst eine Fase. Darüber hinaus ist am der ersten Komponente 30 und der zweiten Komponente 32 zugewandten Ende des zweiten Abschnitts 56 eine Fase vorgesehen.

Folglich hat das Federelement 48 im Bereich des zweiten Abschnitts 56 einen größeren radialen Spielraum als im ersten Abschnitt 54.

Im Bereich des zweiten Abschnitts 56 kann also eine möglicherweise nicht perfekt koaxiale Anordnung der ersten Komponente 30 ausgeglichen werden, ohne dass dabei zwangsläufig das Federelement 48 die Hülse 52 berührt.

Im Beispiel gemäß Figur 2 umfasst der Aufnahmekanal 40 ferner eine Freistellung 58.

Dabei ist die Freistellung 58 als ein Freiraum 60 zur kontaktfreien Aufnahme eines Endabschnitts der ersten Komponente 30 ausgebildet, wobei der Endabschnitt der zweiten Komponente 32 zugewandt ist.

Vorliegend ist dieser Freiraum 60 durch einen zylinderförmigen Abschnitt 61 des Aufnahmekanals 40 gebildet. Dieser liegt auf der der ersten Komponente 30 abgewandten Seite der zweiten Kontaktfläche 44.

Der Freiraum 60 lässt sich beispielsweise als Bohrung umsetzen.

Mit anderen Worten ist der Aufnahmekanal 40 auf der der ersten Komponente 30 abgewandten Seite so lang, dass eine Spitze des kegelförmigen Kontaktabschnitts 34 darin aufgenommen werden kann, ohne die zweite Komponente 32 zu berühren.

Ein Kontakt zwischen der ersten Komponente 30 und der zweiten Komponente 32 erfolgt auf Seiten der zweiten Komponente 32 also ausschließlich über den als zweite Kontaktfläche 44 ausgebildeten Abschnitt der Seitenfläche 42.

Das Federelement 48 erzeugt entlang der Mittelachse A eine Federbeaufschlagung zwischen der ersten Komponente 30 und der zweiten Komponente 32. Aufgrund der Tatsache, dass die erste Kontaktfläche 36 und die zweite Kontaktfläche 44 bezüglich der Mittelachse schräg verlaufen, ergibt sich hinsichtlich einer Kontaktkraft die jeweils senkrecht zwischen der ersten Kontaktfläche 36 und der zweiten Kontaktfläche 44 wirkt, eine Kraftverstärkung. Die Kontaktkraft ist also betragsmäßig größer als die aus der Federbeaufschlagung resultierende Kraft. Auf diese Weise wird eine zuverlässige Kontaktierung und somit eine hohe Signalgüte gewährleistet.

Wie bereits erläutert, hat die zweite Kontaktfläche 44 die Form einer Mantelfläche eines Kegelstumpfes. Somit liegen die erste Komponente 30 und die zweite Komponente 32 sowohl in Axialrichtung, als auch in Radialrichtung aneinander an.

Der Kegelstumpf kann einen Spitzenwinkel von 60 bis 120 Grad haben. In bevorzugten Varianten hat der Kegelstumpf einen Spitzenwinkel von 80 bis 100 Grad, z. B. 90 Grad.

Dasselbe gilt für den Kegelstumpf, durch dessen Mantelfläche die die erste Kontaktfläche 36 gebildet ist.

Durch die Freistellung 58 wird dabei eine rein axiale Anlage der ersten Komponente 30 an der zweiten Komponente 32 ausgeschlossen. Mit anderen Worten ist es aufgrund der geometrischen Gestaltung der ersten Komponente 30 und der zweiten Komponente 32 unmöglich, dass diese rein axial aneinander anliegen.

Dadurch ergibt sich ein besonders leistungsfähiger und zuverlässiger Kontakt zwischen der ersten Komponente 30 und der zweiten Komponente 32. Es lässt sich also ausgehend von der Anschlussbaugruppe 28 über das Federelement 48, die erste Komponente 30 und die zweite Komponente 32 mit großer Zuverlässigkeit ein Strom in die Antriebswelle 12 und somit ins Sägeblatt 14 einleiten. In gleicher Weise kann die Antriebswelle 12 und somit das Sägeblatt 14 unter elektrische Spannung gesetzt werden.

In Figur 3 ist eine alternative Ausführungsform der elektrischen Drehdurchführung 26 zu sehen.

Im Folgenden wird dabei lediglich auf die Unterschiede zur bereits erläuterten Ausführungsform eingegangen. Gleiche oder einander entsprechende Elemente werden mit denselben Bezugszeichen versehen.

Die Ausführungsform gemäß Figur 3 unterscheidet sich im Wesentlichen in zwei Aspekten.

Gemäß einem ersten Aspekt ist das Federelement 48 nun als konisch gewickelte Spiralfeder ausgebildet. Das hat zur Folge, dass das Federelement 48 entlang der Mittelachse A, also in Axialrichtung, bei gleichbleibenden Federkräften vergleichsweise kompakt gestaltet werden kann.

Darüber hinaus ist nunmehr die Hülse 52 mit einem konstanten Innendurchmesser versehen.

Dadurch, dass jedoch nun das Federelement 48 in einem der ersten Komponente 30 und der zweiten Komponente 32 abgewandten Bereich einen größeren Durchmesser hat als in einem der ersten Komponente 30 und der zweiten Komponente 32 zugewandten Bereich, ergibt sich auch in der Ausführungsform gemäß Figur 3 der Effekt, dass das Federelement 48 einerseits durch die Hülse geführt wird, andererseits jedoch in einem der ersten Komponente 30 und der zweiten Komponente 32 benachbarten Bereich ein vergleichsweise großer radialer Freiraum für das Federelement 48 bereitgestellt wird.

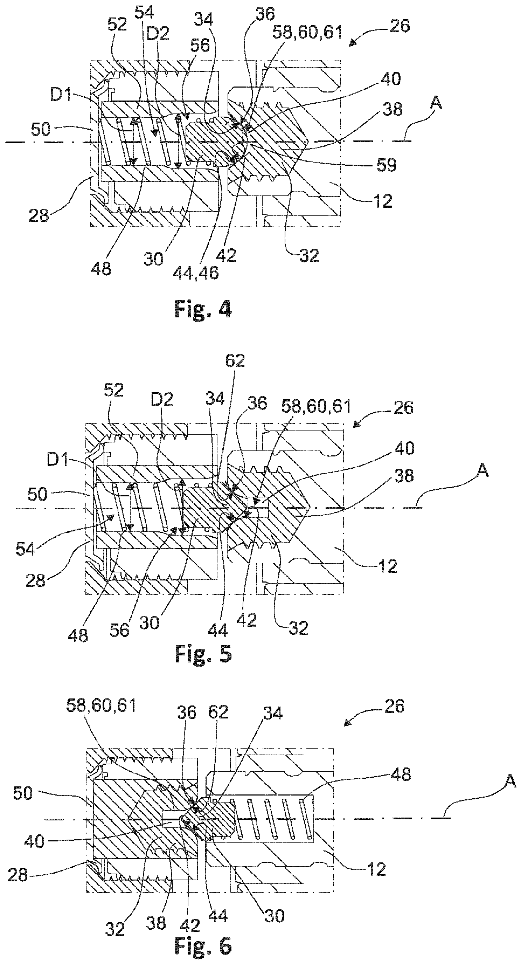

Eine weitere Ausführungsform der Drehdurchführung 26 ist in Figur 4 zu sehen.

Wieder werden im Folgenden lediglich die Unterschiede zu den bereits erläuterten Ausführungsformen erläutert. Gleiche oder einander entsprechende Elemente werden mit denselben Bezugszeichen versehen.

Gegenüber der Ausführungsform aus Figur 2 unterscheidet sich die Ausführungsform aus Figur 4 dadurch, dass der Kontaktabschnitt 34 nicht mehr kegelförmig gestaltet ist, sondern ein kugelabschnittförmiges oder balliges Ende aufweist. Die erste Kontaktfläche 36 ist also durch einen Abschnitt einer Kugelfläche gebildet.

Mit gestrichelten Linien ist in Figur 4 ferner ein weiteres Beispiel eingezeichnet, bei dem die erste Kontaktfläche 36 durch einen konvexen Abschnitt einer Außenfläche eines Torus gebildet ist.

Allgemeiner gesprochen ist die erste Kontaktfläche 36 also eine konvex gewölbte Fläche.

Die Freistellung 58 ergibt sich in der Ausführungsform gemäß Figur 4 dadurch, dass der Radius der ersten Kontaktfläche 36 und der Winkel, unter dem die zweite Kontaktfläche 44 gegenüber der Mittelachse A geneigt ist, derart aufeinander abgestimmt sind, dass die erste Kontaktfläche 36, d. h. die erste Komponente 30, stets einen gewissen Abstand, der größer null ist, von einem der ersten Komponente 30 abgewandten Ende des Aufnahmekanals 40 aufweist.

In diesem Zusammenhang kann die Freistellung 58 als Merkmal des Aufnahmekanals 40 und damit der zweiten Komponente 32 angesehen werden. Bei dieser Betrachtungsweise wird die Freistellung 58 als ein Abschnitt des Aufnahmekanals 40 angesehen.

Alternativ kann die Freistellung 58 als Merkmal des Kontaktabschnitts 34 angesehen werden. Bei dieser Betrachtungsweise ist die Freistellung 58 ein Merkmal der ersten Komponente 30. In dieser Perspektive wird die Freistellung 58 durch eine Fehlstelle 59, d. h. einen Bereich ohne Material der ersten Komponente 30 gebildet. Vorliegend sind diejenigen Bereiche des Kontaktabschnitt 34, die zum Herstellen der ersten Kontaktfläche 36 im Zuge der Produktion entfernt oder gar nicht erst vorgesehen wurden, als Fehlstelle 59 anzusehen.

Im Übrigen kann auf die Erläuterungen zur Ausführungsform gemäß Figur 2 verwiesen werden.

Es versteht sich zudem, dass die Ausführungsformen gemäß Figur 3 und Figur 4 auch kombiniert werden können. Dementsprechend kann die Drehdurchführung 26 gemäß Figur 4 alternativ mit einem Federelement 48 gemäß Figur 3 sowie einer Hülse 52 gemäß Figur 3 ausgestattet werden.

Eine weitere Ausführungsform der Drehdurchführung 26 ist in Figur 5 dargestellt.

Wieder werden lediglich die Unterschiede zu bereits beschriebenen Ausführungsformen erläutert. Gleiche oder einander entsprechende Elemente werden mit denselben Bezugszeichen versehen.

In der Ausführungsform gemäß Figur 5 entsprechen die erste Komponente 30, das Federelement 48 und die Hülse 52 der Ausführungsform gemäß Figur 1.

Allerdings ist nunmehr der Aufnahmekanal 40 anders geformt.

Im Unterschied zu den zuvor erläuterten Ausführungsformen umfasst die Seitenfläche 42 nun einen konvex gewölbten Flächenabschnitt 62, der am Eingang des Aufnahmekanals 40, also am der ersten Komponente 30 zu gewandten Ende des Aufnahmekanals 40 angeordnet ist. Der konvex gewölbte Flächenabschnitt 62 ist wie gehabt rotationssymmetrisch bezüglich der Mittelachse A.

Dabei bildet der konvex gewölbte Flächenabschnitt 62 die zweite Kontaktfläche 44.

Dementsprechend kann in der Ausführungsform gemäß Figur 5 die zweite Kontaktfläche 44 auch als trompetenförmig bezeichnet werden.

Die Freistellung 58 ist analog zu den Ausführungsformen gemäß Figuren 2 und 3 als ein zylinderförmiger Abschnitt 61 des Aufnahmekanals 40 ausgebildet, der sich an den konvex gewölbten Flächenabschnitt 62 auf einer der ersten Komponente 30 abgewandten Seite anschließt.

Es versteht sich, dass die Ausführungsform gemäß Figur 5 auch mit den vorstehenden Ausführungsformen kombiniert werden kann. Insbesondere kann in der Ausführungsform gemäß Figur 5 alternativ eine erste Komponente 30 gemäß der Ausführungsform in Figur 4 vorgesehen sein.

Als weitere Alternative ist in Figur 5 mit gestrichelten Linien eine Kontaktfläche 34 dargestellt, die als konkaver Abschnitt einer Außenfläche eines Torus ausgebildet ist.

Allgemeiner gesprochen kann die erste Kontaktfläche 36 also eine konkav oder konvex gewölbte Fläche sein.

Alternativ oder zusätzlich ist es möglich, dass das Federelement 48 und/oder die Hülse 52 der Ausführungsform gemäß Figur 5 durch das Federelement 48 und/oder die Hülse 52 der Ausführungsform aus Figur 3 ersetzt wird.

Figur 6 zeigt eine weitere Ausführungsform der Drehdurchführung 26.

Wieder werden nur die Unterschiede zu den vorstehenden Ausführungsformen erläutert. Gleiche oder einander entsprechende Elemente werden mit denselben Bezugszeichen versehen.

Die Ausführungsform gemäß Figur 6 ist im Wesentlichen die kinematische Umkehr der Ausführungsform gemäß Figur 5.

Dabei wird lediglich anstelle der Hülse 52 mit zwei Abschnitten unterschiedlicher Innendurchmesser D 1, D2 in der Ausführungsform gemäß Figur 6 das Federelement 48 in einer Bohrung mit konstantem Durchmesser geführt, die entlang der Mittelachse A an der Antriebswelle 12 vorgesehen ist.

Mit anderen Worten ist nunmehr die erste Komponente 30 an der Antriebswelle 12 angeordnet und ist somit drehbar.

Die zweite Komponente 32 steht fest und ist mit der Anschlussbaugruppe 28 verbunden.

Auch wenn lediglich die Ausführungsform gemäß Figur 6 als kinematische Umkehr der Ausführungsform gemäß Figur 5 beschrieben wurde, versteht es sich, dass selbstverständlich auch die Ausführungsformen aus den Figuren 2, 3 und 4 kinematisch umgekehrt funktionieren. Es kann also auch in den Ausführungsformen gemäß Figuren 2, 3 und 4 die erste Komponente an der Antriebswelle 12 angeordnet werden und die zweite Komponente 32 an der Anschlussbaugruppe 28.

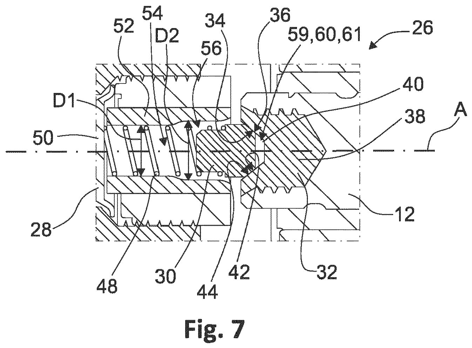

Eine zusätzliche Ausführungsform ist in Figur 7 zu sehen.

Wieder wird lediglich auf die Unterschiede zu den bereits erläuterten Ausführungsformen eingegangen. Gleiche oder einander entsprechende Elemente werden mit denselben Bezugszeichen versehen.

Im Unterschied zu den bereits erläuterten Ausführungsformen ist der Kontaktabschnitt 34 der ersten Komponente 30 nunmehr kegelstumpfförmig. Das bedeutet, dass ausgehend von denjenigen Ausführungsformen, in denen der Kontaktabschnitt kegelförmig ist, die Spitze des Kegels abgeflacht wurde. Dabei stellt die Abflachung eine Freistellung 58 oder Fehlstelle 59 dar.

Der Aufnahmekanal 40 der zweiten Komponente 32 ist nun kegelförmig oder konisch gestaltet.

Aufgrund der Abflachung, d. h. der Freistellung 58, kann jedoch ein rein axialer Kontakt zwischen der ersten Kontaktfläche 36 und der zweiten Kontaktfläche 44 ausgeschlossen werden.

Es versteht sich, dass die Ausführungsformen aus Figur 7 auch kinematisch umgekehrt funktioniert. Ebenso versteht es sich, dass das Federelement 48 der Ausführungsform gemäß Figur 7 durch ein Federelement 48 gemäß der Ausführungsform aus Figur 3 ersetzt werden kann. Die Hülse 52 der Ausführungsform aus Figur 7 kann alternativ mit einem konstanten Innendurchmesser ausgeführt werden.

In allen vorgenannten Ausführungsformen ist der Einsatz 38 aus Graphitwolle hergestellt.

Zur Herstellung des Einsatzes 38 und insbesondere des Aufnahmekanals 40 wird in einem ersten Schritt ein Stück Graphitwolle in den Endabschnitt der Antriebswelle 12 eingepresst. Hierfür ist im Endabschnitt eine Ausnehmung mit einem Innengewinde vorgesehen. Das Stück Graphitwolle weist also noch keinen Aufnahmekanals 40 auf.

In einem zweiten Schritt wird ein Werkzeug, dessen Außenkontur der herzustellenden Innenkontur des Aufnahmekanals 40 entspricht, in die Graphitwolle eingepresst. Auf diese Weise wird die Graphitwolle lokal verdrängt und/oder verformt, sodass sich der Aufnahmekanals 40 in der gewünschten Geometrie ergibt.

Ebenso ist es möglich, dass der erste und der zweite Schritt zusammen ausgeführt werden, also direkt beim Einpressen eines Stücks Graphitwolle die Innenkontur des Aufnahmekanals 40 in die Graphitwolle eingebracht wird.

### Bezugszeichenliste

- 10: Sägevorrichtung
- 12: Antriebswelle
- 14: Sägeblatt
- 16: Basisteil
- 18: Notbremseinheit
- 20: Bremsvorrichtung
- 22: Sensorvorrichtung
- 24: Steuerungseinheit
- 26: elektrische Drehdurchführung
- 28: Anschlussbaugruppe
- 30: erste Komponente der elektrischen Drehdurchführung
- 32: zweite Komponente der elektrischen Drehdurchführung
- 34: Kontaktabschnitt
- 36: erste Kontaktfläche
- 38: Einsatz
- 40: Aufnahmekanal
- 42: Seitenfläche
- 44: zweite Kontaktfläche
- 46: kegelstumpfmantelförmiger Flächenabschnitt
- 48: Federelement
- 50: Grundkörper
- 52: Hülse
- 54: erster Abschnitt der Hülse
- 56: zweiter Abschnitt der Hülse
- 58: Freistellung
- 59: Fehlstelle
- 60: Freiraum
- 61: zylinderförmigen Abschnitt des Aufnahmekanals
- 62: konvex gewölbter Flächenabschnitt

- A: Mittelachse
- D1: erster Innendurchmesser
- D2: zweiter Innendurchmesser

## Patentansprüche

1. Sägevorrichtung (10) mit einer um eine Mittelachse (A) drehbaren Antriebswelle (12) zum rotatorischen Antreiben eines Sägeblatts (14), einem Basisteil (16), an dem die Antriebswelle (12) drehbar gelagert ist, und einer elektrischen Drehdurchführung (26) zur elektrisch leitenden Verbindung der Antriebswelle (12) mit einer Anschlussbaugruppe (28), die am Basisteil (16) befestigt ist,
wobei die elektrische Drehdurchführung (26) eine bezüglich der Mittelachse (A) koaxial angeordnete erste Komponente (30) und eine bezüglich der Mittelachse (A) koaxial angeordnete zweite Komponente (32) aufweist,
wobei die erste Komponente (30) einen sich in Richtung zur zweiten Komponente (32) und entlang der Mittelachse (A) verjüngenden Kontaktabschnitt (34) aufweist, dessen Mantelfläche eine erste Kontaktfläche (36) bildet,
wobei die zweite Komponente (32) einen sich entlang der Mittelachse (A) erstreckenden Aufnahmekanal (40) aufweist, dessen Seitenfläche (42) eine zweite Kontaktfläche (44) bildet,
wobei die erste Kontaktfläche (36) zumindest abschnittsweise an der zweiten Kontaktfläche (44) anliegt, und
wobei der Aufnahmekanal (40) und/oder der sich verjüngende Kontaktabschnitt (34) eine Freistellung (58) zum Ausschluss eines rein axialen Anliegens der ersten Komponente (30) an der zweiten Komponente (32) aufweist.

2. Sägevorrichtung (10) nach Anspruch 1, wobei die Seitenfläche (42) einen kegelstumpfmantelförmigen Flächenabschnitt (46) umfasst und der kegelstumpfmantelförmige Flächenabschnitt (46) die zweite Kontaktfläche (44) bildet.

3. Sägevorrichtung (10) nach Anspruch 1, wobei die Seitenfläche (42) einen konvex gewölbten Flächenabschnitt (62) umfasst und der konvex gewölbte Flächenabschnitt (62) die zweite Kontaktfläche (44) bildet.

4. Sägevorrichtung (10) nach einem der vorhergehenden Ansprüche, wobei der sich verjüngende Kontaktabschnitt (34) und/oder der Aufnahmekanal (40) zumindest abschnittsweise bezüglich der Mittelachse (A) rotationssymmetrisch sind.

5. Sägevorrichtung (10) nach einem der vorhergehenden Ansprüche, wobei die erste Komponente (30) und die zweite Komponente (32) mittels eines Federelements (48) gegeneinander federbeaufschlagt sind.

6. Sägevorrichtung (10) nach Anspruch 5, wobei das Federelement (48) eine zylindrisch oder konisch gewickelte Spiralfeder umfasst.

7. Sägevorrichtung (10) nach Anspruch 5 oder 6, wobei das Federelement (48) in einer Hülse (52) geführt ist.

8. Sägevorrichtung (10) nach Anspruch 7, wobei die Hülse (52) einen ersten Abschnitt (54) mit einem ersten Innendurchmesser (D1) und einen zweiten Abschnitt (56) mit einem zweiten Innendurchmesser (D2) aufweist, wobei der zweite Innendurchmesser (D2) größer ist als der erste Innendurchmesser (D1) und der zweite Abschnitt (56) der zu beaufschlagenden ersten Komponente (30) oder zweiten Komponente (32) zugewandt ist.

9. Sägevorrichtung (10) nach einem der vorhergehenden Ansprüche, wobei die Freistellung (58) durch einen Freiraum (60) zur kontaktfreien Aufnahme eines der zweiten Komponente (32) zugewandten Endabschnitts der ersten Komponente (30) gebildet ist.

10. Sägevorrichtung (10) nach Anspruch 9, wobei der Freiraum (60) durch einen zylinderförmigen Abschnitt (61) des Aufnahmekanals (40) gebildet ist, der auf einer der ersten Komponente (30) abgewandten Seite der zweiten Kontaktfläche (44) liegt.

11. Sägevorrichtung (10) nach einem der vorhergehenden Ansprüche, wobei die Freistellung (58) durch eine Fehlstelle (59) an einem der zweiten Komponente (32) zugewandten Endabschnitt der ersten Komponente (30) gebildet ist.

12. Sägevorrichtung (10) nach einem der vorhergehenden Ansprüche, wobei die zweite Komponente (32) durch einen Endabschnitt der Antriebswelle (12) gebildet ist und der Aufnahmekanal (40) in der Antriebswelle (12) angeordnet ist, oder
wobei die zweite Komponente (32) durch ein Element der Anschlussbaugruppe (28) gebildet ist und der Aufnahmekanal (40) im Element der Anschlussbaugruppe (28) angeordnet ist.

13. Sägevorrichtung (10) nach einem der vorhergehenden Ansprüche, wobei die zweite Komponente (32) einen Einsatz (38) umfasst und der Aufnahmekanal (40) im Einsatz (38) angeordnet ist.

14. Sägevorrichtung (10) nach Anspruch 12 und 13, wobei der Einsatz (38) über einen entlang der Mittelachse (A) wirkenden Formschluss mit dem Endabschnitt der Antriebswelle (12) oder dem Element der Anschlussbaugruppe (28) verbunden ist.

15. Elektrische Drehdurchführung (26) für eine Sägevorrichtung (10) und insbesondere zum elektrisch leitenden Verbinden einer um eine Mittelachse (A) drehbaren Antriebswelle (12) mit einer relativ zur Antriebswelle (12) feststehenden Anschlussbaugruppe (28), umfassend eine erste Komponente (30) und eine zweite Komponente (32), die bezüglich einer Mittelachse (A) koaxial angeordnet sind,
wobei die erste Komponente (30) einen sich in Richtung zur zweiten Komponente (32) und entlang der Mittelachse (A) verjüngenden Kontaktabschnitt (34) aufweist, dessen Mantelfläche eine erste Kontaktfläche (36) bildet,
wobei die zweite Komponente (32) einen sich entlang der Mittelachse (A) erstreckenden Aufnahmekanal (40) aufweist, dessen Seitenfläche (42) eine zweite Kontaktfläche (44) bildet,
wobei die erste Kontaktfläche (36) zumindest abschnittsweise an der zweiten Kontaktfläche (44) anliegt, und
wobei der Aufnahmekanal (40) und/oder der Kontaktabschnitt (34) eine Freistellung (58) zum Ausschluss eines rein axialen Anliegens der ersten Komponente (30) an der zweiten Komponente (32) aufweist.
